# NEUE EUROPÄISCHE PATENTSCHRIFT

(11) **EP 1 034 875 B2**
(45) Veröffentlichungstag und Bekanntmachung des Hinweises auf die Entscheidung über den Einspruch: **21.01.2009**
(45) Hinweis auf die Patenterteilung: 07.01.2004
(21) Anmeldenummer: 00102231.8
(22) Anmeldetag: 14.02.2000
(51) Int. Cl.: B23K 26/00, B23P 23/02, B23K 26/42

(54) **Werkzeugmaschine für die Werkstückbearbeitung mit spanenden Werkzeugen und Laserstrahl**
Workpiece machining machine tool with cutting tools and laser beam
Machine-outil pour l'usinage avec outils de coupe et laser

(30) Priorität: 11.03.1999 DE 19910880
(43) Veröffentlichungstag der Anmeldung: 13.09.2000
(73) Patentinhaber: DECKEL MAHO GmbH, D-87459 Pfronten (DE)
(72) Erfinder: Friedrich, Wilfried, 87537 Seeg (DE)
(74) Vertreter: Beetz & Partner

(56) Entgegenhaltungen:
- EP-A- 0 700 746
- EP-A- 0 813 925
- DE-A- 4 040 554
- DE-A- 4 113 633
- JP-A- 04 288 987
- US-A- 5 523 543
- US-A- 5 869 803
- W. KöNIG ET AL.: 'Laserunterstütztes Fräsen' VDI ZEITUNG Nr. 2, Februar 1992, Seiten 43 - 48
- M. WECK ET AL.: 'Laserintegration in Werkzeugmaschinen' VDI ZEITUNG Bd. 135, Nr. 5, Mai 1992, Seiten 38 - 41
- L. MORGENTAHL ET AL.: 'Laserstrahlschweissen in KW-Leistungsbereich mit Schneller Strahlablenkung' WISSENSCHAFTLICHE BERICHTE DER HOHCHSCHULE MITTWEIDA 1998, ISSN 1430-3698 Seiten 149 - 156
- DECKEL MAHO GMBH: 'DMU 60 L - Bahnbrechende Lasertechnologie mit solider Basis' PROSPEKT DECKEL MAHO PFRONTEN DEUTSCHLAND,

## Beschreibung

Die Erfindung betrifft eine Werkzeugmaschine für die Werkstückbearbeitung mit spanenden Werkzeugen und mit Laserstrahl, der im Oberbegriff des Patentanspruchs 1 angegebenen Gattung.

Eine derartige Werkzeugmaschine ist aus der DE 40 40 554 Al bekannt. Dort wird der Laserstrahl von einer am hinteren Ende eines Spindelstocks montierten Laserstrahlquelle in Achsrichtung des Spindelstocks durch eine hohl ausgebildete horizontale Arbeitsspindel zu einem in die Arbeitsspindel einwechselbaren Düsenkopf mit einer Fokussieroptik geführt. Für einen Wechsel zwischen einer spanenden Bearbeitung und einer Bearbeitung mittels Laserstrahl ist allerdings bei einer derartigen Werkzeugmaschine an der Arbeitsspindel zunächst ein relativ aufwendiger Wechselvorgang zwischen einem Spanwerkzeug und dem Düsenkopf für die Laserbearbeitung erforderlich.

Aufgabe der Erfindung ist es, eine Werkzeugmaschine der eingangs genannten Art zu schaffen, die mit einem vereinfachten konstruktiven Aufbau sowohl eine Bearbeitung mittels spanender Werkzeuge als auch eine Bearbeitung mittels Laserstrahl ohne aufwendige Wechselvorgänge ermöglicht.

Diese Aufgabe wird erfindungsgemäß dadurch durch die Merkmale des Patentanspruchs 1 gelöst.

Die erfindungsgemäße Werkzeugmaschine weist den wesentlichen Vorteil auf, daß eine Laserstrahlbearbeitung durchgeführt werden kann, ohne daß zunächst ein Düsenkopf mit einer Fokussieroptik oder dgl. in die Arbeitsspindel eingewechselt werden muß. Außerdem können durch die z.B. seitliche Anordnung der Strahlführung an der Bearbeitungseinheit auch herkömmliche Werkzeugmaschinen auf einfache Weise für eine Laserstrahlbearbeitung nachgerüstet werden.

Die Strahlführungsanordnung enthält einen seitlich an einem Fräskopf angeordneten Laserkopf mit einem Scannersystem, durch das eine schnelle Führung eines fokussierten Laserstrahls über einen vorgegeben Arbeitsbereich des Werkstücks z.B. zum schichtweisen Materialabtrag ermöglicht wird. Der durch das Scannersystem vorgegebene Arbeitsbereich kann durch die Verfahrmöglichkeiten des Fräskopfes und des Arbeitstisches ohne zusätzliche Antriebe auf einfache Weise erweitert werden. Dadurch wird auch eine großflächigere Laserstrahlbearbeitung ohne Umspannen der Werkstücke ermöglicht.

Zur Ablenkung des Laserstrahls für die Abtastung der Oberfläche innerhalb des vorgegebenen Arbeitsbereichs enthält das Scannersystem zweckmäßigerweise einen um eine Vertikalachse verschwenkbaren ersten Umlenkspiegel und einen um eine Horizontalachse verschwenkbaren zweiten Umlenkspiegel. Mit Hilfe einer verschieb- bzw. verstellbaren Fokussieroptik oder einer Planfeldoptik kann eine Verschiebung der Fokuslage aufgrund einer sich durch die Drehung der Umlenkspiegel ergebenden Längenänderung in der durch den Laserstrahl beschriebenen Bahn ausgeglichen werden. Durch Verwendung einer Fokussieroptik und einer Planfeldoptik ist eine noch genauere Korrektur erreichbar.

In einer weiteren vorteilhaften Ausführung ist der Laserkopf mit dem Scannersystem derart an dem Fräskopf angeordnet, daß der Strahlaustritt am Laserkopf unterhalb des vorderen Endes der Arbeitsspindel liegt. Dadurch kann der Abstand zwischen Werkstück und Laserkopf klein gewählt werden. Der Laserkopf mit dem Scannersystem kann entweder fest oder abnehmbar an dem Fräskopf gehaltert sein. Eine abnehmbare Anordnung hat den Vorteil, daß der Bearbeitungsbereich für eine spanende Bearbeitung nicht durch den Laserkopf eingeschränkt ist und daß der Laserkopf zum Schutz des Scannersystems während der spanenden Bearbeitung z.B. durch einen automatischen Werkzeugwechsler in eine geschützte Ablageposition an einen Werkzeugmagazin oder dgl. verbracht werden kann.

Weitere Besonderheiten und Vorzüge der Erfindung ergeben sich aus der folgenden Beschreibung eines vorteilhaften Ausführungsbeispiels anhand der Zeichnung. Es zeigt:
- Fig. 1:: eine erfindungsgemäße Werkzeugmaschine in schematischer Perspektivansicht; und
- Fig. 2:: eine schematische Darstellung des Aufbaus eines Scannersystems an der Werkzeugmaschine von Fig. 1.

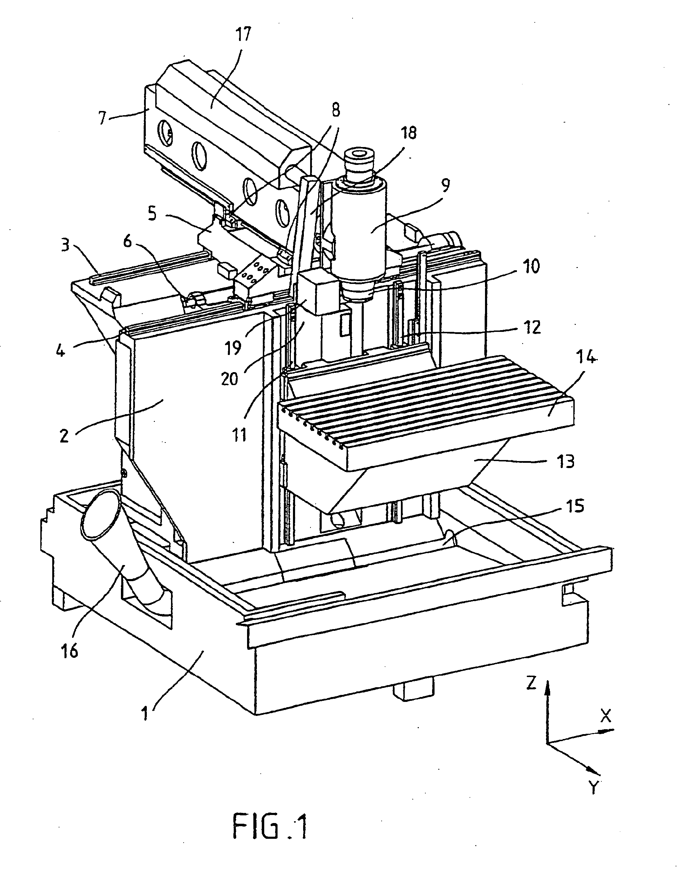

Die in Fig. 1 schematisch dargestellte Werkzeugmaschine enthält ein Maschinenbett 1, auf dem ein formsteifer Ständer 2 befestigt ist. Auf der Oberseite des Ständers 2 sind zwei parallele Führungsschienen 3 und 4 angeordnet, auf denen ein Querschlitten 5 über eine drehangetriebene Gewindespindel 6 in einer X-Achse motorisch verfahrbar ist. Auf der Oberseite des Querschlittens 5 ist ein Spindelstock 7 über Führungen 8 durch einen nicht dargestellten Motor in einer Y-Achse verfahrbar montiert. Der Spindelstock 7 trägt an seiner Vorderseite einen Fräskopf 9, in dem eine motorisch angetriebene Arbeitsspindel 10 mit einem inneren Spannkonus zur Aufnahme von z.B. Fräs- und Bohrwerkzeugen bzw. Werkzeughaltern gelagert ist.

An der Vorderseite des Ständers 2 sind vertikale Führungsschienen 11 und 12 montiert, an denen eine Konsole 13 mit einem Werkstücktisch 14 in einer Z-Achse motorisch verschiebbar geführt ist. Unterhalb der Konsole 13 ist im Maschinenbett 1 eine Vertiefung 15 vorgesehen, in der eine nicht dargestellte Schnecke zum Abtransport der Bearbeitungsspäne über einen Späneabfuhrkanal 16 angeordnet ist.

Auf dem Spindelstock 7 ist als Laserstrahlquelle ein zur Mittelachse des Spindelstocks 7 seitlich vesetzter Nd-YAG-Laser 17 angeordnet, von dem ein dort erzeugter Laserstrahl über einen Strahlführungskanal 18 zu einem seitlich am Fräskopf 9 angeordneten Laserkopf 19 mit einem Scannersystem 20 zur Fokussierung des Laserstrahls und dessen Führung über eine Werkstückoberfläche geleitet wird.

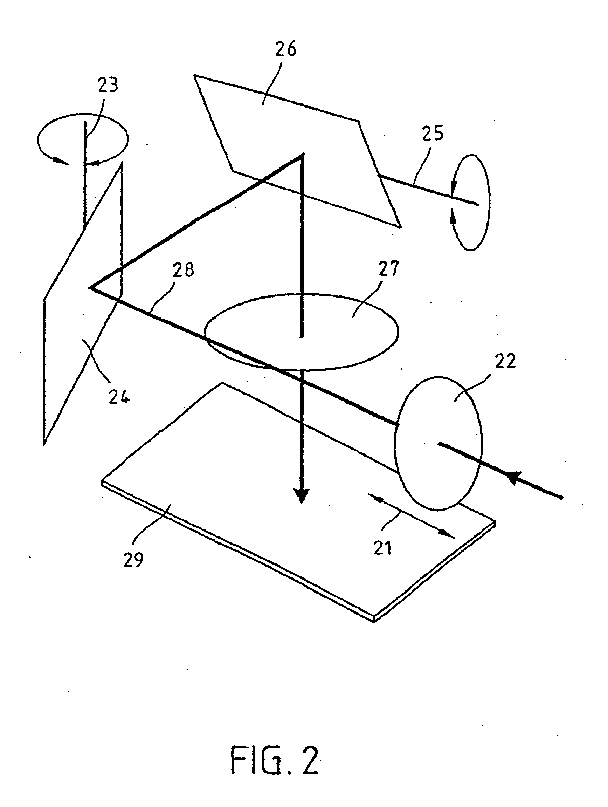

Das in Fig. 1 dargestellte Scannersystem 20 enthält gemäß Fig. 2 eine in Richtung eines Doppelpfeils 21 verschiebbare Fokussieroptik 22, einen um eine Vertikalachse 23 verdrehbaren ersten Umlenkspiegel 24, einen um eine Horizontalachse 25 drehbaren zweiten Umlenkspiegel 26 und eine Planfeldoptik 27, über die der Laserstrahl 28 auf ein Werkstück 29 gelenkt wird. Durch Verschwenken der beiden Umlenkspiegel 24 und 26 kann der fokussierte Laserstrahl 28 innerhalb eines vorgegebenen Arbeitsbereichs über die Oberfläche des Werkstücks 29 zum Materialabtrag geführt werden. Mit Hilfe der in Richtung des Doppelpfeils 21 verschiebbaren Fokussieroptik 22 kann eine Verschiebung der Fokuslage aufgrund einer sich durch die Drehung der Umlenkspiegel 24 und 26 ergebenden Längendifferenz in der durch den Laserstrahl beschriebenen Bahn ausgeglichen werden. Durch die Planfeldoptik 27 kann sichergestellt werden, daß sich die Fokusebene trotz einer Auslenkung des Laserstrahls durch Verdrehung der Umlenkspiegel 24 und 26 zur Abtastung der Werkstückoberfläche innerhalb einer gleichbleibenden Ebene befindet. Die Verschiebung der Fokussieroptik 22 und die Drehung der Umlenkspiegel 24 und 26 kann über nicht dargestellte Antriebsmotoren erfolgen, die durch eine geeignete Steuer- bzw. Regeleinrichtung angesteuert sind.

Das Scannersystem 20 ist innerhalb des Laserkopfs 19 derart am Fräskopf 9 angeordnet, daß der Strahlaustritt am Laserkopf 19 unterhalb des vorderen Endes der Arbeitsspindel 10 erfolgt und ein nicht abgelenkter Laserstrahl 28 parallel zur Mittelachse der Arbeitsspindel 10 auf die Oberfläche des zu bearbeitenden Werkstücks 29 trifft. Der Laserkopf 19 mit dem Scannersystem 20 kann fest am Fräskopf 9 montiert sein. Der Laserkopf 19 mit der Scannersystem 20 kann aber auch als abnehmbare Einheit ausgebildet sein, die bei Bedarf z.B. über ein Werkzeugwechselsystem an ihre Arbeitsposition gebracht bzw. wieder in eine Ablageposition transportiert wird. Dadurch kann das Scannersystem 20 vor Verschmutzungen während der spanenden Bearbeitung geschützt werden.

Die Arbeitsweise der erfindungsgemäßen Werkzeugmaschine ergibt sich ohne weiteres aus der Zeichnung. Zur Bearbeitung eines Werkstücks mit Laserstrahl kann der im Nd-YAG-Laser 17 erzeugte und über den mit Umlenkspiegeln oder Lichtleitern versehenen Führungskanal 18 zu dem Scannersystem 20 im Laserkopf 19 geführte Laserstrahl 28 durch Drehung der Umlenkspiegel 24 und 26 innerhalb eines durch die Drehmöglichkeiten der Umlenkspiegel begrenzten Arbeitsbereichs über die Oberfläche eines auf dem Werkstücktisch 14 in der Z-Achse in eine Bearbeitungsposition unterhalb des Scannetsystems 22 verfahrenen Werkstücks 29 z.B. zum schichtweisen Materialabtrag bewegt werden. Dieser begrenzte Arbeitsbereich kann durch Verfahren des Querschlittens 5 in der X-Achse und durch Verfahren des Spindelstocks 7 mit dem Fräskopf 9 in der Y-Achse erweitert werden. Dadurch wird auch eine großflächige Laserstrahlbearbeitung ohne Umspannung des Werkstücks ermöglicht. Zur Durchführung einer spanenden Bearbeitung kann z.B. ein Fräs- oder Bohrwerkzeug in die Arbeitsspindel 10 z.B. mit Hilfe eines nicht dargestellten Werkzeugwechslers eingesetzt werden, wobei die Wechselvorgänge mittels einer Programmsteuerung automatisiert ablaufen können.

Die Erfindung ist nicht auf das im einzelnen beschriebene und in der Zeichnung dargestellte Ausführungsbeispiel beschränkt. So können auch anders ausgebildete Fräs- und Bohrmaschinen und ggf. auch Drehmaschinen mit einem zur Arbeitsspindel oder einem Revolver versetzt angeordneten Laserkopf versehen sein. Die Bearbeitungseinheit mit dem Laserkopf kann auch verschwenkbar sein, um eine 5-Achs-Bearbeitung zu ermöglichen und z.B. einen Schriftzug oder eine Abwicklung auf einer räumlich gekrümmten Fläche herzustellen. Anstelle des Nd-YAD-Lasers können außerdem auch Diodenlaser , CO₂-Laser oder andere Laser verwendet werden.

## Patentansprüche

1. Werkzeugmaschine für die Werkstückbearbeitung mit spanenden Werkzeugen und mit Laserstrahl, die
- eine motorisch in der X- und der Y-Achse verfahrbare Bearbeitungseinheit (9) mit einer motorisch angetriebenen Arbeitsspindel (10) für die Werkstückbearbeitung mit spanenden Werkzeugen,
- eine Laserstrahlquelle (17) mit einer Strahlführungsanordnung (18, 19, 20) für die Werkstückbearbeitung mit Laserstrahl und
- einen motorisch verfahrbaren Werkstücktisch (14) zur Aufspannung von mindestens einem Werkstück enthält,
- wobei die Strahlführungsanordnung einen Laserkopf (19) und einen zwischen der Laserstrahlquelle (17) und dem Laserkopf (19) angeordneten Strahlführungskanal (18) aufweist,
**dadurch gekennzeichnet, daß**
- die Strahlfuhrungsanordnung (18, 19, 20) seitlich versetzt zur Arbeitsspindel (10) an der Bearbeitungseinheit (9) angeordnet ist und
- der Laserkopf (19) ein Scannersystem (20) zur Fokussierung und Führung des Laserstrahls über einen vorgegebenen Arbeitsbereich des Werkstücks aufweist.

2. Werkzeugmaschine nach Anspruch 1,
**dadurch gekennzeichnet, daß**
das Scannersystem (20) einen um eine Vertikalachse (23) verschwenkbaren ersten Umlenkspiegel (24) und einen um eine Horizontalachse (25) verschwenkbaren zweiten Umlenkspiegel (26) enthält.

3. Werkzeugmaschine nach Anspruch 1 oder 2,
**dadurch gekennzeichnet, daß**
das Scannersystem (20) eine verschiebbare Fokussieroptik (22) und/oder eine Planfeldoptik (27) zur Einstellung der Strahlfokussierung enthält.

4. Werkzeugmaschine nach einem der Ansprüche 1 bis 3,
**dadurch gekennzeichnet, daß**
die Bearbeitungseinheit (9) ein Fräskopf oder Revolver oder Werkzeugträger ist, an dem der Laserkopf (19) mit dem Scannersystem (20) versetzt angeordnet ist.

5. Werkzeugmaschine nach einem der Ansprüche 1 bis 4,
**dadurch gekennzeichnet, daß**
der Laserkopf (19) mit dem Scannersystem (20) fest oder abnehmbar an der Bearbeitungseinheit (9) angeordnet ist.

6. Werkzeugmaschine nach einem der Ansprüche 1 bis 5,
**dadurch gekennzeichnet, daß**
der Laserkopf (19) mit dem Scannersystem (20) derart an der Bearbeitungseinheit (9) angeordnet ist, daß der Strahlaustritt am Laserkopf (19) unterhalb des vorderen Endes der Arbeitsspindel (10) liegt.

7. Werkzeugmaschine nach einem der Ansprüche 1 bis 6,
**dadurch gekennzeichnet, daß**
die Laserstrahlquelle (17) ein zur Mittelachse der Bearbeitungseinheit (9) versetzter Nd-YAG-Laser, Diodenlaser oder CO₂-Laser ist.

## Claims

1. A machine tool with cutting tools and a laser beam for machining workpieces, comprising
- a machining unit (9) with a motor-driven work spindle (10) for machining a workpiece with cutting tools, which machining unit can be motor-driven in the X- and Y-axis,
- a laser-beam source (17) with a beam-guiding arrangement (18, 19, 20) for machining a workpiece with a laser beam, and
- a motor-driven work table (14) for clamping at least one workpiece,
- wherein the beam-guiding arrangement comprises a laser head (19) and a beam-guiding channel (18) disposed between the laser beam source (17) and the laser head (19),
**characterized in that**
- the beam-guiding arrangement (18, 19, 20) is offset relative to the work spindle (10) on the machining unit (9), and
- the laser head (19) comprises a scanner system (20) for focussing and guiding the laser beam over a set working area of the workpiece.

2. The machine tool according to claim 1,
**characterized in that**
the scanner system (20) contains a first deflecting mirror (24) pivotable around a vertical axis (23) and a second deflecting mirror (26) pivotable around a horizontal axis (25).

3. The machine tool according to claim 1 or 2,
**characterized in that**
the scanner system (20) contains a movable focussing lens (22) and/or a plane field lens (27) for adjusting the beam focussing.

4. The machine tool according to any one of claims 1 to 3,
**characterized in that**
the machining unit (9) is a milling head or turret or tool-holder on which the laser head (19) and scanner system (20) are mounted in an offset position.

5. The machine tool according to any one of claims 1 to 4,
**characterized in that**
the laser head (19) and the scanner system (20) are fixed on or removable from the machining unit (9).

6. The machine tool according to any one of claims 1 to 5,
**characterized in that**
the laser head (19) and the scanner system (20) are so disposed on the machining unit (9) that the beam outlet on the laser head (19) is under the front end of the work spindle (10).

7. The machine tool according to any one of claims 1 to 6,
**characterized in that**
the laser beam source (17) is an Nd-YAG laser or diode laser or CO₂ laser offset from the central axis of the machining unit (9).

## Revendications

1. Machine outil pour l'usinage de pièces avec des outils coupants et avec un rayon laser, comprenant
- un module d'usinage (9) pouvant être déplacé à l'aide d'un moteur sur l'axe des X et des Y, avec un arbre moteur (10) entraîné par un moteur pour l'usinage de pièces avec des outils coupants,
- une source de rayonnement laser (17) avec un dispositif de guidage du rayon (18, 19, 20) pour l'usinage de pièces avec le rayon laser et
- une table porte-pièces (14) mue par moteur pour le serrage d'au moins une pièce à usiner,
- où le dispositif de guidage du rayon présente une tête laser (19) et un canal de guidage du rayon (18) disposé entre la source de rayonnement laser (17) et la tête laser (19),
**caractérisée en ce que**
- le dispositif de guidage du rayon (18, 19, 20) est disposé sur le module d'usinage (9) en position décalée latéralement par rapport à l'arbre moteur (10), et
- la tête laser (19) présente un système de scanner (20) pour la focalisation et le guidage du rayon laser au-dessus d'une zone de travail prédéterminée de la pièce à usiner.

2. Machine outil selon la revendication 1,
**caractérisée en ce que**
le système de scanner (20) comprend un premier miroir de déviation (24) pouvant basculer autour d'un axe vertical (23) et un deuxième miroir de déviation (26) pouvant basculer autour d'un axe horizontal (25).

3. Machine outil selon la revendication 1 ou 2,
**caractérisée en ce que**
le système de scanner (20) comprend une optique de focalisation pouvant coulisser (22) et/ou une optique à champ plat (27) pour le réglage de la focalisation du rayon.

4. Machine outil selon l'une des revendications 1 à 3,
**caractérisée en ce que**
le module d'usinage (9) est une tête de fraisage ou un revolver ou un porte-outil, sur lequel est disposée en décalage la tête laser (19) avec le système de scanner (20).

5. Machine outil selon l'une des revendications 1 à 4,
**caractérisée en ce que**
la tête laser (19) avec le système de scanner (20) est disposée de manière fixe ou amovible sur le module d'usinage (9).

6. Machine outil selon l'une des revendications 1 à 5,
**caractérisée en ce que**
la tête laser (19) avec le système de scanner (20) est disposée sur le module d'usinage (9) de manière que la sortie du rayon sur la tête laser (19) se situe en dessous de l'extrémité avant de l'arbre moteur (10).

7. Machine outil selon l'une des revendications 1 à 6,
**caractérisée en ce que**
la source de rayonnement laser (17) est un laser Nd-YAG, un laser à diodes ou un laser CO₂, décalé par rapport à l'axe médian du module d'usinage (9).
